# EUROPÄISCHE PATENTSCHRIFT

(11) **EP 1 456 704 B1**
(45) Veröffentlichungstag und Bekanntmachung des Hinweises auf die Patenterteilung: **08.08.2007**
(21) Anmeldenummer: 02805262.9
(22) Anmeldetag: 09.12.2002
(51) Int. Cl.: G02B 6/44

(54) **OPTISCHE FESTADER UND VERFAHREN ZU DEREN HERSTELLUNG**
SOLID CORE OPTICAL FIBER AND METHOD FOR THE PRODUCTION THEREOF
FIBRE OPTIQUE SOLIDE ET SON PROCEDE DE PRODUCTION

(30) Priorität: 12.12.2001 DE 10161045
(43) Veröffentlichungstag der Anmeldung: 15.09.2004
(73) Patentinhaber: CCS Technology, Inc., Wilmington, DE 19803 (US)
(72) Erfinder: SCHUCHMANN, Joachim, 96528 Effelder (DE); TISCHER, Swen, 96465 Neustadt (DE); WILL, Horst, verstorben (DE)
(74) Vertreter: Epping - Hermann - Fischer
(86) Internationale Anmeldenummer: PCT/DE2002/004510
(87) Internationale Veröffentlichungsnummer: WO 2003/054594

(56) Entgegenhaltungen:
- DE-A- 19 718 476
- DE-A- 19 908 110
- US-A- 4 331 378
- US-A- 4 472 021
- US-A- 5 838 862
- J. FALBE, M. REGITZ (HRSG): "Römpp-Lexikon Chemie" 1999 , GEORG THIEME VERLAG , STUTTGART, NEW YORK XP002246120 Seite 4106 -Seite 4110
- J.R. FALENDER, S.E. LINDSEY, J.C. SAAM: "Silicone-Polyethylene Blends" POLYMER ENGINEERING AND SCIENCE, Bd. 16, Nr. 1, Januar 1976 (1976-01), Seiten 54-58, XP002246325

## Beschreibung

Die vorliegende Erfindung betrifft eine optische Festader sowie ein Verfahren zur Herstellung einer optischen Festader.

Um Lichtwellenleiter beispielsweise in Form von optischen Glasfasern weitgehend frei von äußeren Einflüssen zu halten, sind Lichtwellenleiter im allgemeinen durch eine Umhüllung geschützt. Eine einfache Möglichkeit, Lichtwellenleiter in Form von Glasfasern vor äußeren Einflüssen zu schützen, besteht darin, den Lichtwellenleiter mit einer Beschichtung. (sogenanntes Coating) zu versehen und unmittelbar über der Beschichtung des Lichtwellenleiters eine feste Schutzhülle aus einem geeigneten Kunststoff aufzubringen. Eine solche Anordnung wird im allgemeinen als Festader oder Vollader bezeichnet. Eine derartige Aderkonstruktion zeichnet sich insbesondere dadurch aus, daß gegenüber einer Hohlader eine beträchtliche Verringerung des Außendurchmessers der Ader erreicht wird.

Insbesondere zur Installation und Konfektionierung ist es erforderlich, die Aderhülle einer Festader vom Lichtwellenleiter abzusetzen. Zur Verbesserung der Absetzbarkeit einer PVC-Aderhülle, die Polyvinylchlorid enthält, von einer Beschichtung eines Lichtwellenleiters ist es bekannt, zwischen der Aderhülle und der Beschichtung des Lichtwellenleiters eine Teflonschicht (sogenannte TB-2 Beschichtung als Trennschicht vorzusehen. Damit kann ein Benutzer relativ leicht die Aderhülle einer Festader über eine größere Länge in einem Gang abstreifen.

Eine derart konstruierte optische Festader weist jedoch auch gewisse Nachteile auf. Eine optische Festader mit TB-2 Beschichtung ist vergleichsweise teuer in der Herstellung, insbesondere ist das Aufbringen der unterschiedlichen Schichten vergleichsweise aufwendig. Bei dem Aufbringen der Schichten in einem Arbeitsgang besteht die Gefahr einer ungleichmäßigen Schichtstärke und einer Knotenbildung des Teflons verursacht durch Abrieb im Extrusionswerkzeug. Außerdem können durch Fehlstellen, an denen kein Teflon vorhanden ist, lokale Dämpfungsspitzen der optischen Festader verursacht werden. Weiterhin ist im allgemeinen nur eine begrenzte Abzugsgeschwindigkeit beim Extrusionsprozeß möglich. Bei einem 2-Schritt-Extrusionsprozeß, bei dem zuerst die Teflonschicht und anschließend die PVC-Aderhülle aufgebracht wird, entstehen zusätzliche Investitionskosten, verursacht durch eine entsprechende Erweiterung der Extrusionslinien. Weiterhin können Handhabungsprobleme entstehen, da die Teflonschicht im allgemeinen durch ein 3-Komponenten-Gemisch gebildet wird, wobei auf eine gleichmäßige Dispersion im Gemisch zu achten ist und die Komponenten gesundheitsgefährdende Bestandteile aufweisen.

Druckschrift DE19718476 A1 offenbart eine optische Festader bestehend aus einem Lichtwellenleiter mit einer Acryl-Beschichtung und einer flammenhemmenden, nicht-korrosiven Aderhülle. Der Aderhülle ist eine Polysiloxan-verbindung beigemischt, um eine verbesserte Trennfähigkeit der Aderhülle vom Lichtwellenleiter zu erreichen.

Die Aufgabe der vorliegenden Erfindung ist es, eine optische Festader anzugeben, bei der unter Vermeidung der oben genannten Nachteile die PVC-Aderhülle vergleichsweise einfach von der Beschichtung des Lichtwellenleiters absetzbar ist.

Weiterhin ist es Aufgabe der vorliegenden Erfindung, ein Verfahren zur Herstellung einer derartigen optischen Festader anzugeben.

Die Aufgabe betreffend die optische Festader wird gelöst durch eine optische Festader gemäß Patentanspruch 1. Die Aufgabe betreffend das Verfahren zur Herstellung einer optischen Festader wird gelöst durch ein Verfahren zur Herstellung einer optischen Festader gemäß Patentanspruch 9.

Die erfindungsgemäße optische Festader weist eine Aderhülle mit einem Polyvinylchlorid enthaltenen Aderhüllenmaterial auf, das eine in dem Aderhüllenmaterial verteilte Feststoffkomponente enthält, die einen mechanischen Trenneffekt gegen-über der Acryl enthaltenden Beschichtung des Lichtwellenleiters bewirkt. Dem Aderhüllenmaterial wird dabei HTV-Silikonkautschuk (Hochtemperatur-vulkanisierbarer Silikonkautschuk) auf Basis von Polydimethylvinylsiloxan beigemischt, wobei es sich bei der Polydimethylvinylsiloxan-Formulierung um eine hochmolekulare Poysiloxanformulierung handelt. Die Herstellung der optischen Festader erfolgt derart, daß in das die Aderhülle bildende und Polyvinylchlorid enthaltende Matrixmaterial die den Trenneffekt zur Beschichtung des Lichtwellenleiters bewirkende Feststoffkomponente in einem Compoundier-Prozeß eingemischt und verteilt wird.

Man erhält dadurch den Vorteil, daß sich die Herstellungskosten im Vergleich zu einer Aderkonstruktion mit Teflontrennschicht deutlich reduzieren, da zum einen auf vergleichsweise teures Teflon verzichtet werden kann, durch Vorsehen eines 1-Schritt-Extrusionsprozesses die Investitionskosten gering gehalten werden können und der Zeitaufwand zur Herstellung der Festader verringert werden kann. Zur Herstellung der erfindungsgemäßen Festader wird nur eine Extrusionslinie mit einem Extrusionsverfahren benötigt. Im Vergleich zur Herstellung einer Festader mit Teflontrennschicht kann die Extrusionsgeschwindigkeit beim Aufbringen der PVC-Aderhülle auf den beschichteten Lichtwellenleiter signifikant erhöht werden, beispielsweise von einer Geschwindigkeit 140 m/min bei der Herstellung einer Festader mit Teflon-Trennschicht auf eine Geschwindigkeit größer 300 m/min bei der Herstellung einer erfindungsgemäßen Festader.

Das Vorsehen der Feststoffkomponente beeinflußt das physikalische Gesamteigenschaftsbild der PVC-Aderhülle nicht, da insbesondere die Festigkeit und das Temperaturverhalten der PVC-Aderhülle nicht beeinflußt werden. Dadurch werden lokale Dämpfungseigenschaften der erfindungsgemäßen Festader durch Vorsehen der Feststoffkomponente nicht beeinflußt. Insgesamt wird somit bei der erfindungsgemäßen Aderkonstruktion das physikalische und optische Eigenschaftsbild der Festader nicht negativ beeinflußt.

In einer vorteilhaften Ausführungsform der Erfindung wird in das Aderhüllenmaterial als Feststoffkomponente ein Silikonelastomer eingemischt. Dies wird dem Matrixmaterial der Aderhülle in einem Compoundierprozeß beigemischt, so daß die Feststoffkomponente in Form des Silikonelastomers in dem Aderhüllenmaterial statistisch homogen verteilt ist.

In einer bevorzugten Ausführungsform der Erfindung weist die hochmolekulare Polysiloxanformulierung eine Molekülkettenlänge größer etwa 100.000 polymerisierte Monomere auf.

In einer weiteren Ausführungsform der Erfindung wird dem Aderhüllenmaterial eine Komponente beigemischt, die aufgrund ihres chemischen Aufbaus eine Aversion oder Unverträglichkeit zur Beschichtung des Lichtwellenleiters aufweist und somit den Trenneffekt gegenüber der Beschichtung des Lichtwellenleiters bewirkt. Eine derartige Komponente kann beispielsweise durch chloriertes Polyethylen (CPE) gebildet werden.

In einer weiteren Ausführungsform der Erfindung wird dem Aderhüllenmaterial als Füllstoffanteil ein mineralisches Gleit- oder Trennmittel, insbesondere in Form einer hochdispersen Kieselsäure (Sipernat 44) oder eines Talkum-Produkts, beigemischt.

In einer weiteren vorteilhaften Ausführungsform der Erfindung wird dem Aderhüllenmaterial ein wachsartiges Trennmittel, insbesondere Metallseife oder Fettsäureester, beigemischt.

Weitere vorteilhafte Aus- und Weiterbildungen der Erfindung sind in Unteransprüchen angegeben.

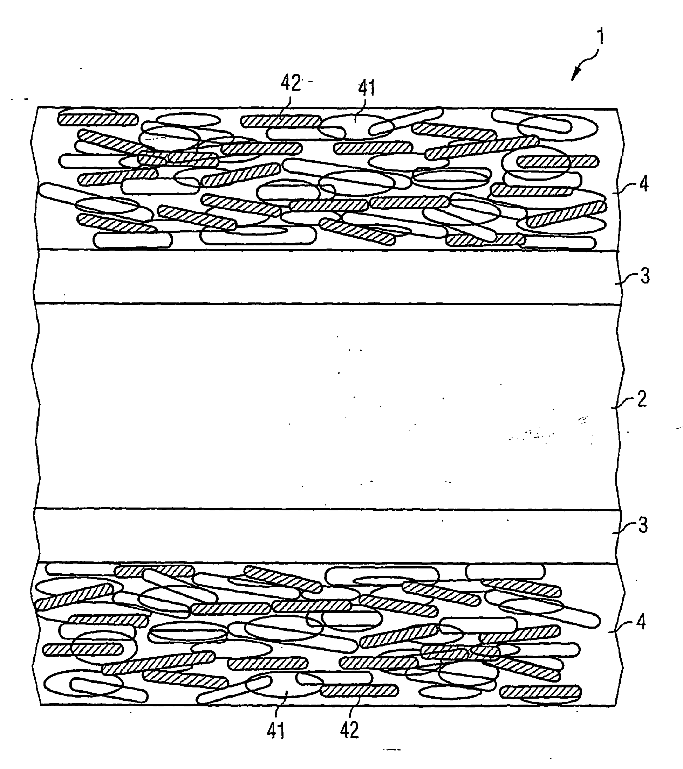

Die Erfindung wird im folgenden anhand der in der Zeichnung dargestellten Figur, die eine Ausführungsform einer erfindungsgemäßen Festader darstellt, näher erläutert.

Die Figur zeigt einen Längsschnitt durch eine optische Festader 1, die einen Lichtwellenleiter in Form einer optischen Glasfaser 2 aufweist. Die Glasfaser 2 ist ringsum mit einer Acryl-Beschichtung 3 versehen. Auf die Beschichtung 3 ist die Aderhülle 4 aufgebracht, die die optische Festader 1 nach außen abschließt. Die Aderhülle 4 ist durch einen PVC-Isolier-Compound gebildet, wobei die in dem Aderhüllenmaterial enthaltenen Polyvinylchloride durch Bezugszeichen 41 symbolisiert sind. In dem Aderhüllenmaterial der Aderhülle 4 ist weiterhin eine unlösliche Feststoffkomponente 42 enthalten, die bei der Herstellung der Festader in einem CompoundierProzeß derart beigemischt wurde, daß sie in dem Aderhüllenmaterial statistisch homogen verteilt ist. Die Feststoffkomponente 42 in Form einer hochmolekularen Polysiloxanformulierung bewirkt einen mechanischen Trenneffekt gegenüber der Acryl-Beschichtung 3 des Lichtwellenleiters 2.

Durch Vorsehen der Feststoffkomponente 42 kann die Absetzbarkeit der Aderhülle 4 von der Beschichtung 3 des Lichtwellenleiters 2 deutlich verbessert werden. Dabei wird vorteilhaft durch das hochmolekulare Polysiloxan das physikalische und optische Eigenschaftsbild der Festader 1 nicht negativ beeinflußt. Außerdem wird das physikalische Gesamteigenschaftsbild der PVC-Aderhülle insbesondere hinsichtlich Festigkeit und Temperaturverhalten nicht beeinflußt. Um mit der Beimischung des Polysiloxan negative lokale Dämpfungserhöhungen zu vermeiden, ist das Polysiloxan derart hochmolekular, daß es nicht migriert und nicht in die Beschichtung 4 wandert.

In einer weiteren Ausführungsform der Erfindung wird dem Aderhüllenmaterial der Aderhülle 4 eine Feststoffkomponente 42 beigemischt, die aufgrund ihres chemischen Aufbaus eine Aversion zur Acryl-Beschichtung 3 des Lichtwellenleiters 2 aufweist. Eine derartige Komponente wird insbesondere durch chloriertes Polyethylen gebildet.

## Patentansprüche

1. Optische Festader mit einem Lichtwellenleiter (2), der eine Acryl enthaltende Beschichtung (3) aufweist, und mit einer Aderhülle (4) mit einem Polyvinylchlorid (41) enthaltenden Aderhüllenmaterial, das auf die Beschichtung des Lichtwellenleiters aufgebracht ist und eine in dem Aderhüllenmaterial verteilte Feststoffkomponente (42) enthält, die einen mechanischen Trenneffekt gegenüber der Beschichtung des Lichtwellenleiters bewirkt, wobei die Feststoffkomponente Hochtemperatur-vulkanisierbarer Silikonkautschuk auf Basis von Polydimethylvinylsiloxan ist und es sich bei der Polydimethylvinylsiloxan Formulierung um eine hochmolekulare Formulierung handelt.

2. Optische Festader nach Anspruch 1,
**dadurch gekennzeichnet, daß**
die hochmolekulare Polysiloxanformulierung eine Molekülkettenlänge größer etwa 100.000 polymerisierte Monomere enthält.

3. Optische Festader nach einem der Ansprüche 1 oder 2,
**dadurch gekennzeichnet, daß**
das Aderhüllenmaterial chloriertes Polyethylen enthält.

4. Optische Festader nach einem der Ansprüche 1 bis 3,
**dadurch gekennzeichnet, daß**
das Aderhüllenmaterial ein mineralisches Gleit- oder Trennmittel, insbesondere hochdisperse Kieselsäure oder ein Talkum-Produkt, enthält.

5. Optische Festader nach einem der Ansprüche 1 bis 4,
**dadurch gekennzeichnet, daß**
das Aderhüllenmaterial ein wachsartiges Trennmittel, insbesondere Metallseife oder Fettsäureester, enthält.

6. Verfahren zur Herstellung einer optischen Festader mit einem Lichtwellenleiter (2), der eine Acryl enthaltende Beschichtung (3) aufweist, bei dem in ein eine Aderhülle (4) bildendes und Polyvinylchlorid (41) enthaltendes Matrixmaterial eine Feststoffkomponente (42), die einen mechanischen Trenneffekt zur Beschichtung des Lichtwellenleiters bewirkt, in einem Compoundier-Prozeß eingemischt und verteilt wird, wobei dem Matrixmaterial Hochtemperatur-vulkanisierbarer-Silikonkautschuk auf Basis von Polydimethylvinylsiloxan beigemischt wird und wobei es sich bei der Polydimethylvinylsiloxan-Formulierung um eine hochmolekulare Formulierung handelt.

## Claims

1. Tight-buffered optical fiber comprising an optical waveguide (2), which has a coating (3) containing acrylic, and comprising a buffer tube (4) with a buffer tube material which contains polyvinyl chloride (41), is applied to the coating of the optical waveguide and includes a solid component (42), which is distributed in the buffer tube material and has a mechanical separating effect with respect to the coating of the optical waveguide, the solid component being high temperature-vulcanized silicone rubber based on polydimethylvinyl siloxane, and the polydimethylvinyl siloxane formulation being a high molecular weight formulation.

2. Tight-buffered optical fiber according to Claim 1, **characterized in that** the high molecular weight polysiloxane formulation includes a molecule chain length greater than approximately 100 000 polymerized monomers.

3. Tight-buffered optical fiber according to either of Claims 1 and 2, **characterized in that** the buffer tube material includes chlorinated polyethylene.

4. Tight-buffered optical fiber according to one of Claims 1 to 3, **characterized in that** the buffer tube material includes a mineral lubricant or release agent, in particular fine-particle silica or a talc product.

5. Tight-buffered optical fiber according to one of Claims 1 to 4, **characterized in that** the buffer tube material includes a wax-like release agent, in particular metal soap or fatty acid ester.

6. Method for producing an tight-buffered optical fiber comprising an optical waveguide (2), which has a coating (3) containing acrylic, in which method a solid component (42), which has a mechanical separating effect with respect to the coating of the optical waveguide, is mixed into a matrix material containing polyvinyl chloride (41) and forming a buffer tube (4) in a compounding process and is distributed, high temperature-vulcanized silicone rubber based on polydimethylvinyl siloxane being admixed with the matrix material and the polydimethylvinyl siloxane formulation being a high molecular weight formulation.

## Revendications

1. Fibre optique solide comprenant un guide (2) d'ondes lumineuses, qui a un revêtement (3) acrylique et une gaine (4) de fibre, ayant une matière de gaine de fibre contenant du poly(chlorure de vinyle) (41), qui est déposée sur le revêtement du guide d'ondes lumineuses et qui contient un constituant (42) solide qui est réparti dans la matière de gaine de fibre et qui provoque un effet mécanique de séparation par rapport au revêtement du guide d'ondes lumineuses, le constituant de matière solide étant un caoutchouc de silicone vulcanisable à haute température à base de polydiméthylvinylsiloxane et la formulation du polydiméthylvinylsiloxane est une formulation de grande masse moléculaire.

2. Fibre optique solide suivant la revendication 1,
**caractérisé en ce que**
la formulation de polysiloxane de grande masse moléculaire a une longueur de chaîne de molécules plus grande qu'environ 100 000 monomères polymérisés.

3. Fibre optique solide suivant l'une des revendications 1 ou 2, **caractérisée en ce que** la matière de gaine de fibre contient du polyéthylène chloré.

4. Fibre optique solide suivant l'une des revendications 1 ou 3, **caractérisée en ce que** la matière de gaine de fibre contient un agent minéral lubrifiant ou de séparation, notamment de l'acide silicique très dispersé ou un produit à base de talc.

5. Fibre optique solide suivant l'une des revendications 1 ou 4, **caractérisée en ce que** la matière de gaine de fibre est un agent de séparation cireux, notamment un savon métallique ou un ester d'acide gras.

6. Procédé de fabrication d'une fibre optique solide, comprenant un guide (2) d'ondes lumineuses qui a un revêtement (3) acrylique, dans lequel on mélange et on répartit, dans une opération de malaxage, un constituant (42) de matière solide, qui provoque un effet mécanique de séparation vis-à-vis du revêtement du guide d'ondes lumineuses, dans une matière de matrice formant une gaine (4) de fibre et contenant du poly(chlorure de vinyle) (41), du caoutchouc de silicone pouvant être vulcanisé à une température haute et à base de polydiméthylvinylsiloxane étant ajouté à la matière de matrice et la formulation de polydiméthylvinylsiloxane étant une formulation de grande masse moléculaire.
